# EUROPÄISCHE PATENTSCHRIFT

(11) **EP 3 253 816 B1**
(45) Veröffentlichungstag und Bekanntmachung des Hinweises auf die Patenterteilung: **06.04.2022**
(21) Anmeldenummer: 16702913.1
(22) Anmeldetag: 02.02.2016
(51) Int. Cl.: C08G 69/16, B01D 11/02, B29B 9/06, C08G 69/48

(54) **VERFAHREN UND VORRICHTUNG ZUR HERSTELLUNG VON POLYAMIDEN MIT OPTIMIERTER STRÖMUNGSFÜHRUNG**
METHOD AND DEVICE FOR PRODUCING POLYAMIDES, WITH OPTIMIZED FLOW MANAGEMENT
PROCÉDÉ ET DISPOSITIF DE FABRICATION DE POLYAMIDES AVEC ÉCOULEMENT DIRIGÉ

(30) Priorität: 04.02.2015 DE 102015201969
(43) Veröffentlichungstag der Anmeldung: 13.12.2017
(73) Patentinhaber: Uhde Inventa-Fischer GmbH, 13509 Berlin (DE); thyssenkrupp AG, 45143 Essen (DE)
(72) Erfinder: KÖNIGSMANN, Bernd, 15518 Langewahl (DE)
(74) Vertreter: thyssenkrupp Intellectual Property GmbH
(86) Internationale Anmeldenummer: PCT/EP2016/052121
(87) Internationale Veröffentlichungsnummer: WO 2016/124562

(56) Entgegenhaltungen:
- EP-A1- 2 156 933
- DE-A1-102007 057 189

## Beschreibung

Die Erfindung betrifft ein Verfahren zur Herstellung von Polyamiden, wobei die Strömungsführung im Prozess effizienter gestaltet wird. Das Verfahren basiert dabei auf der Polymerisation von Lactam zu einer Polyamid-haltigen Polymerschmelze, der anschließenden Granulierung der Polymerschmelze zu Polyamid-Granulat unter Verwendung von Granulierflüssigkeit und der anschließenden Extraktion von monomeren und oligomeren Bestandteilen aus dem PA-Granulat in einer Extraktionskolonne. Ebenso betrifft die Erfindung eine Vorrichtung zur Durchführung des genannten Verfahrens.

Während der Produktion von Polyamid 6 (PA6)-Granulat mittels Polykondensation aus Lactamen wird die im VK-Rohr gewonnene Schmelze nach dem Abkühlen (normalerweise mit temperiertem Wasser, das geringe Mengen von Lactam enthält) entweder per Strang- oder Unterwassergranulieren zu Granulat bzw. Chips verarbeitet. Das zum Granulieren benötigte Wasser wird auch als Schneidwasser bezeichnet. Die Temperatur, Menge und zulässige Konzentration an Lactam des jeweils benötigten Schneidwassers richtet sich hierbei zum einem nach dem verwendeten Granulierverfahren und zum anderem auch nach dem gewünschten Aussehen der PA6-Chips.

Da die granulierten PA6-Chips Anteile von bis zu 11% Lactam und Oligomere enthalten, welche zumindest teilweise wasserlöslich sind, würde sich der Anteil an Lactam und Oligomeren im Schneidwasser im Laufe des Granulierens stetig aufkonzentrieren, was zu Problemen beim Granulieren und sogar zum Ausfall der Granulierung führen könnte, z.B. wegen verstärkter Schaumbildung und/oder zum Verstopfen der Filter im Schneidwasserkreislauf. Das Beseitigen solcher Störungen kann unter Umständen mehrere Stunden dauern und selbst nach Beseitigung der Störung kommt es zu nachfolgenden Qualitätsschwankungen für weitere Stunden der Produktion. Diese Qualitätsschwankungen führen in der Regel dazu, dass während dem genannten Zeitraum kein Granulat der gewünschten Qualität produziert werden kann bzw. nur eine sog. B-Qualität produziert werden kann, die aussortiert und nur zu einem herabgesetzten Preis verkauft werden kann. Um solche Störungen zu vermeiden wird in der Regel ein bestimmter Strom reinen demineralisierten Wassers dem Schneidwasserstrom kontinuierlich oder chargenweise zugeführt, um den Anteil an gelöstem Lactam und Oligomeren zu begrenzen bzw. einzustellen. Die jeweiligen zulässigen Grenzwerte für Lactam und Oligomeren im Schneidwasser variieren je nach Granulierverfahren und gewünschter Schneidwassertemperatur. Erfahrungswerte für den Anteil an Lactam und Oligomeren im Schneidwasser liegen hier ca. zwischen 1,0 bis 3,0 Gew.-% für Lactam und Oligomere. Das überschüssige Wasser im Schneidwasserkreislauf wird mittels Überlaufregelung oder automatischer Füllstandsregelung abgetrennt und der Lactam-Wasser-Recyclinganlage (Eindampfung) zugeführt. Die eingestellte Menge an demineralisierten Wasser, welche dem Schneidwasserkreislauf zugeführt wird, muss somit zusätzlich in der Eindampfung verarbeitet werden und erhöht so den Verbrauch an Heizenergie (in der Regel Heizdampf). So muss hier je nach vorhandener Ausrüstung und Betriebserfahrung nach gewisser Zeit der optimale Einstellpunkt für die Zugabe des demineralisierten Wassers gefunden werden. Häufig werden die Mengen an demineralisiertem Wasser zu gering eingestellt, um Heizdampf zu sparen, welches aber über kurz oder lang zu den erwähnten Problemen in der Granulierung führt.

Die bei der Polykondensation von Polyamid 6 (oder Polyamid 6 mit Copolymeranteil < 30%) in der Schmelze verbleibenden Oligomere und Monomere des Rohmaterials Lactam (und Oligomere der Rohstoffe, die für die Herstellung von Copolymeren benötigt werden) müssen in einer nachgeschalteten Extraktions-Einheit abgetrennt werden. Der Gehalt an Monomeren und Oligomeren liegt meist oberhalb von 6 Gew.-%). Die Abtrennung wird in der Regel mittels eines ein- oder mehrstufigen Extraktionsprozesses durchgeführt. Hierbei wird das abgekühlte und zu Granulat zerkleinerte Polymer im Gegenstrom zu einer Extraktionsflüssigkeit (in der Regel Wasser mit unterschiedlich hohen Lactamgehalten) geführt. Dabei nimmt die Extraktionsflüssigkeit die Monomere und Oligomere (extrahierbare Stoffe) aus dem Polymergranulat auf, der Gesamtgehalt an extrahierbaren Stoffen kann im Granulat auf weit unter 1 Gew.-% reduziert werden. Die Extraktionsflüssigkeit, die anstelle der extrahierbaren Stoffe im Polymer verbleibt, muss in einer nachfolgenden Trocknungsstufe entfernt werden. Die Strömungsführung ist in der Regel in der Art, dass das Granulat in einem Sickerbett von oben nach unten durch den Extraktionsbehälter geführt wird, wobei die Extraktionsflüssigkeit von unten nach oben geleitet wird. Eine gleichmäßige Strömung von Granulat und Extraktionsflüssigkeit soll durch Einbauten gewährleistet werden.

Aufgrund der unterschiedlichen Löslichkeit von Monomeren und Oligomeren in der Extraktionsflüssigkeit wird die Extraktion häufig in zwei (oder mehreren) Schritten durchgeführt. In einer ersten Stufe werden die Oligomere mit einer geeigneten Extraktionsflüssigkeit, meist Wasser mit einem Lactamanteil von 5 bis 50 Gew.-%, abgetrennt. In einer (oder mehreren) weiteren Extraktionsstufen wird mittels einer geeigneten Extraktionsflüssigkeit, meist Wasser mit einem Lactamanteil von unter 0,5 Gew.-%, die Monomere und die restlich verbliebenen Oligomere aus dem Polymer entfernt.

Aus der US 8,541,540 B2 ist ein kontinuierliches Verfahren bekannt, bei dem für die Granulation anstelle von frischem Wasser das bereits in der Extraktionsstufe eingesetzte Wasser verwendet wird, wodurch der Energieverbrauch des Verfahrens gesenkt werden kann.

Aus EP 2 156 933 A1 ist ein kontinuierliches Verfahren zur Extraktion von monomerem Caprolactam und daraus entstandenen Oligomeren aus dem bei der Polymerisation zu Polyamid-6 erhaltenen Polymer-Rohprodukt beschrieben, bei dem für die Granulation kein Frischwasser, sondern Prozesswasser oder bereits verwendetes Extraktwasser eingesetzt wird.

DE 10 2007 057 189 A1 offenbart ein Verfahren und Vorrichtung zur Herstellung von Polyamid, wobei die Unterwassergranulation und die Extraktion unter Verwendung desselben Prozessfluids erfolgen.

Die Temperierung der Extraktionsflüssigkeit hat einen sehr großen Einfluss auf das Ergebnis der Extraktion. So zeigen höhere Temperaturen bessere Extraktionsergebnisse. Die Extraktionsapparate werden aus Kostengründen meistens als drucklose Apparate ausgeführt. Somit ergibt sich als maximal einstellbare Eintrittstemperatur der Extraktionsflüssigkeit die jeweils mit dem hydrostatischen Druck korrespondierende Siedetemperatur.

Die Extraktionsflüssigkeit wird üblicherweise einmalig durch innen- oder außenliegenden Heizregister auf die gewünschte Temperatur gebracht, wobei die maximal einstellbare Temperatur die Siedetemperatur entsprechend der jeweiligen hydrostatischen Säule im Extraktionsapparat ist. Diese wird am Boden des Extraktionsapparates eingespeist. Diese Methode bietet jedoch nicht die Möglichkeit, dass die Extraktionsflüssigkeit über die gesamte Länge des Extraktionsapparates entlang ihrer jeweiligen Siedetemperatur temperiert werden kann. Speziell wenn eine mehrstufige Extraktion verwendet werden muss, um den geforderten Restextraktgehalt von deutlich weniger als 1,0

Gew.-% zu erreichen, ist die Eintrittstemperatur des vorextrahierten Granulates nahe der Siedetemperatur der Extraktionsflüssigkeit. Die Transportflüssigkeit wird am Kopf des Extraktionsreaktors abgetrennt. Durch die hohe Temperatur des Granulates wird die Extraktionsflüssigkeit in der Extraktionskolonne kaum abgekühlt. Aus diesem Grund ist eine zusätzliche Kühlung der Extraktionsflüssigkeit notwendig.

Es war daher Aufgabe der vorliegenden Erfindung, ein Verfahren zur Herstellung von Polyamiden bereitzustellen, bei dem eine zusätzliche Kühlung der Extraktionsflüssigkeit vermieden werden kann und so ein ökonomischer Prozess ermöglicht wird. Diese Aufgabe wird durch das Verfahren mit den Merkmalen des Anspruchs 1 und die Vorrichtung mit den Merkmalen des Anspruchs 9 gelöst. Die weiteren abhängigen Ansprüche zeigen vorteilhafte Weiterbildungen auf.

Erfindungsgemäß wird ein Verfahren zur Herstellung von Polyamiden gemäß Patentanspruch 1 bereitgestellt.

Dabei wird zumindest ein Teil der Granulierflüssigkeit an mehreren Einspeisestellen Extraktionskolonne in den Extraktionsflüssigkeitsstrom zur Einstellung der Temperatur und Lactamkonzentration des

Extra ktionsflüssigkeitsstroms eingespeist.

Durch die erfindungsgemäße gezielte Zugabe der Granulierflüssigkeit an mehreren Einspeisestellen der Extraktionskolonne kann die Zugabetemperatur des Extraktionsflüssigkeitsstroms deutlich oberhalb der atmosphärischen Siedetemperatur liegen. Hierdurch wird die Extraktionsleistung deutlich gesteigert. Eine weitere Steigerung der Extraktionsleistung geschieht durch die Konzentrationserniedrigung im oberen Teil der Extraktionskolonne durch die Zugabe der Granulierflüssigkeit, die im Vergleich zum Stand der Technik einen geringeren Anteil an Lactam aufweist. Hierdurch wird im oberen Teil der Extraktionskolonne das treibende Konzentrationsgefälle zwischen Granulat und Granulierflüssigkeit erhöht. Durch die Kombination dieser beiden Effekte kann die Volumeneffizienz der Extraktionskolonne deutlich gesteigert werden. Das Volumen der Extraktionskolonne kann somit reduziert werden oder bei gleichem Volumen die Extraktionskapazität gesteigert werden.

Erfindungsgemäß ist es dass die Temperatur der Granulierflüssigkeit vor der Einspeisung in den Extraktionsflüssigkeitsstrom niedriger ist als die Temperatur des Extraktionsflüssigkeitsstroms vor der Einspeisung der Granulierflüssigkeit, wobei die Temperatur der Granulierflüssigkeit vor der Einspeisung in den Extraktionsflüssigkeitsstrom bevorzugt 10 °C bis 50 °C, besonders bevorzugt 15 °C bis 40 °C, ganz besonders bevorzugt 20 °C bis 30 °C, beträgt.

Eine weitere bevorzugte Ausführungsform sieht vor, dass der Anteil an Lactam und oligomeren Bestandteilen in der Granulierflüssigkeit vor der Einspeisung in den Extraktionsflüssigkeitsstrom niedriger ist als der Anteil an Lactam und/oder oligomeren Bestandteilen im Extraktionsflüssigkeitsstrom vor der Einspeisung der Granulierflüssigkeit, wobei der Anteil an Lactam und/oder oligomeren Bestandteilen in der Granulierflüssigkeit vor der Einspeisung in den Extraktionsflüssigkeitsstrom bevorzugt 0,1 Gew.-% bis 5,0 Gew.-%, besonders bevorzugt 0,5 Gew.-% bis 4,0 Gew.-%, ganz besonders bevorzugt 1,0 Gew.-% bis 3,0 Gew.-%, beträgt.

Es erfindungsgemäß vorgesehen, dass die Granulierflüssigkeit an 1 bis 10 Einspeisestellen der Extraktionskolonne, bevorzugt an 1 bis 4 Einspeisestellen der Extraktionskolonne, in den Extraktionsflüssigkeitsstrom zur Einstellung der Temperatur und Lactamkonzentration des Extraktionsflüssigkeitsstroms eingespeist wird, welche Einspeisestellen sich auf verschiedenen Höhen der Extraktionskolonne befinden.

Hierbei wird die Menge der eingespeisten Granulierflüssigkeit vorzugsweise mithilfe geeigneter Einrichtungen gemessen und eingestellt. Die Einstellung der Menge der Granulierflüssigkeit erfolgt in der Regel mithilfe von automatischen Durchflussmessgeräten in Kombination mit Regelventilen, die durch eine automatische Steuerung eingestellt werden. Eine manuelle Einregelung (Handventil mit oder ohne lokale Durchflussmessung) des Granulierflüssigkeitsstromes ist alternativ möglich.

Es ist weiter bevorzugt, dass die Granulierflüssigkeit Lactam und/oder oligomere Bestandteile enthält und mit Hilfe eines Granulierflüssigkeitskreislaufes bereitgestellt wird, wobei in den Granulierflüssigkeitskreislauf kontinuierlich oder chargenweise reines demineralisiertes Wasser eingespeist wird und wobei bevorzugt der Anteil an Lactam und/oder oligomeren Bestandteilen in der Granulierflüssigkeit mit Hilfe eines geeigneten Messgerätes gemessen und die Menge des eingespeisten reinen demineralisierten Wassers basierend auf den so ermittelten Messwerten eingestellt wird, um so den Anteil an Lactam und oligomeren Bestandteilen in der Granulierflüssigkeit in einem bestimmten Bereich zu halten.

Eine weitere bevorzugte Ausführungsform sieht vor, dass zwischen dem Schritt der Granulierung und dem Schritt der Extraktion ein Schritt der Vorextraktion in einer Vorextraktionskolonne durchgeführt wird, wobei bevorzugt der Extraktionsflüssigkeitsstrom nach der Durchführung der Extraktion aus der Extraktionskolonne abgeleitet, anschließend dem Vorextraktionsbehälter zugeführt und dort im Gegenstrom zum PA-Granulat geführt wird.

Es ist weiter bevorzugt, dass der Extraktionsflüssigkeitsstrom nach der Durchführung der Extraktion oder, falls eine solche durchgeführt wird, der Vorextraktion aus der Extraktionskolonne oder, falls eine Vorextraktion durchgeführt wird, aus der Vorextraktionskolonne abgeleitet und einem Sammelbecken zur Eindampfung zugeführt wird, wobei dem Sammelbecken zur Eindampfung keine zusätzliche Granulierflüssigkeit aus einer anderen Quelle zugeführt wird.

Erfindungsgemäß wird ebenso eine Vorrichtung zur Herstellung von Polyamiden mit optimierter Strömungsführung gemäß Patentanspruch 9 bereitgestellt.

Bei der erfindungsgemäßen Vorrichtung ist es bevorzugt, dass diese einen Sammeltank zur Eindampfung enthält, wobei der Sammeltank zur Eindampfung mit dem Extraktionsbehälter oder, falls ein solcher vorhanden ist, mit dem Vorextraktionsbehälter verbunden ist, und zwar derart, dass ein aus dem Extraktionsbehälter bzw. dem Vorextraktionsbehälter abgeleiteter Extraktionsflüssigkeitsstrom dem Sammelbecken zur Eindampfung zugeführt werden kann, und wobei der Sammeltank zur Eindampfung mit der Granulierungsanlage nicht derart verbunden ist, dass die Granulierflüssigkeit direkt dem Sammeltank zur Eindampfung zugeführt werden kann.

Die Granulieranlage ist vorzugsweise mit einem Granulierflüssigkeitskreislauf verbunden, der bevorzugt einen Granulierflüssigkeitstank, besonders bevorzugt einen Granulierflüssigkeitstank mit einem Überlaufventil enthält.

Die Extraktionskolonne weist erfindungsgemäß 1 bis 10, bevorzugt 1 bis 4 Einspeisestellen für die Granulierflüssigkeit auf, wobei die mehreren Einspeisestellen auf verschiedenen Höhen der Extraktionskolonne angeordnet sind.

Es ist weiter bevorzugt, dass die Vorrichtung einen Vorextraktionsbehälter aufweist.

Anhand der nachfolgenden Beispiele und Figuren soll der erfindungsgemäße Gegenstand näher erläutert werden, ohne diesen auf die hier gezeigten spezifischen Ausführungsformen einschränken zu wollen.
- Fig. 1: zeigt eine schematische Darstellung eines Verfahrens gemäß dem Stand der Technik

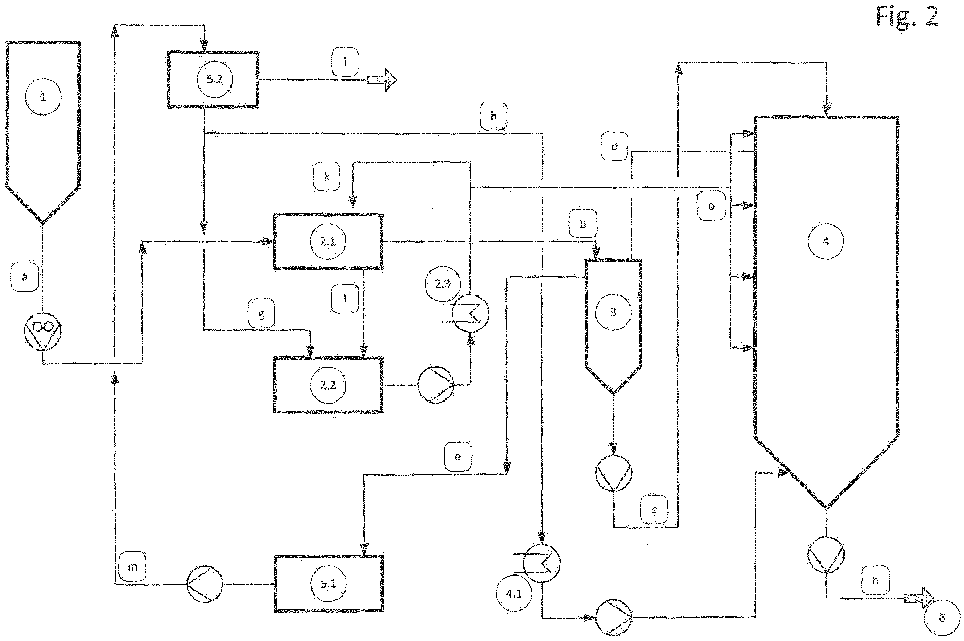

- Fig. 2: zeigt eine schematische Darstellung eines erfindungsgemäßen Verfahrens

Mit dem erfindungsgemäßen Verfahren wird ein Polymergranulat hergestellt, das einen geringen Anteil von niedrigmolekularen Bestandteilen besitzt. Die aus den Edukten erstellte Polymerschmelze muss hierfür zur weiteren Verarbeitung verfestigt werden und in zylindrische oder sphärische Partikel (Granulat) aufgeteilt werden. Hierfür wird die Schmelze (a), die aus dem Polymerisationsreaktor (1) mittels Pumpe gefördert wird, zur Granulierungsstufe (2.1) geleitet. Hier wird die Polymerschmelze durch einen gekühlten Schneidwasserstrom (k) verfestigt und durch ein rotierendes Schneidwerkzeug in gleichmäßige Partikel (Granulat) zerteilt. Der Schneidwasserstrom (k)wird im Schneidwassertank (2.2) vorgehalten, per Pumpe über den Kühler (2.3) in die Granulierungsstufe (2.1) gefördert und fließt mit erhöhter Temperatur wieder zurück (Strom I) in den Schneidwassertank (2.2). Um die Konzentration des Schneidwassers (k) konstant zu halten, wird kontinuierlich ein Nachspeisestrom (g) in den Schneidwassertank (2.2) geleitet. Dieser Nachspeisestrom wird dem Kondensatstrom der Verdampferanlage (5.2) entnommen. Durch die Zuführung des Nachspeisewassers (g) kommt es zu einer Ableitung aus dem Schneidwasserkreislauf (f) der wieder über den Sammeltank der Eindampfanlage (5.1) zurück in die Eindampfanlage (5.2) geführt wird, um dort Verunreinigungen zu entfernen.

Der Granulatstrom (b) aus der Granulierstufe (2.1) wird in die Pre-Extraktionsstufe (3) geleitet. Hier werden mittels einer Pre-Extraktionsflüssigkeit Monomere und niedrigmolekulare Bestandteile des Polymers ausgewaschen. Die Pre-Extraktionsflüssigkeit besteht zum Hauptteil aus dem Ablauf von Extraktionsflüssigkeit (d) aus dem Haupt-Extrakteur (4), welcher in die Pre-Extraktionsstufe geleitet wird (d). Der Ablaufstrom von mit niedrigmolekularen Bestandteilen belasteter Pre-Extraktionsflüssigkeit wird dem Sammeltank der Eindampfanlage (5.1) zugeführt (Strom e). Granulat, das von einem großen Teil niedrigmolekularen Stoffen befreit ist, wird aus der Pre-Extraktionsstufe (3) in die Haupt-Extraktionsstufe (4) geleitet (Strom c). Hier wird das Polymer weiter durch Kontakt mit einer Extraktionsflüssigkeit, von Monomeren und niedrigmolekularen Bestandteilen befreit. Diese gehen in die Extraktionsflüssigkeit über und werden im Ablaufstrom (d) zur Pre-Extraktionsstufe geleitet. Die Extraktionsflüssigkeit mit niedrigem Anteil von niedrigmolekularen Bestandteilen, die der Haupt-Extraktionsstufe zugeleitet wird (Strom h) wird dem Kondensatstrom aus der Eindampfanlage (5.2) entnommen. Die Extraktionsflüssigkeit wird mittels einer Pumpe gefördert, in der Temperatur durch einen Heizer (4.1) eingestellt und dem Haupt-Extrakteur zugeführt.

Das ausreichend von niedrigmolekularen Bestandteilen befreite Polymergranulat wird am unteren Ende des Haupt-Extrakteurs entnommen (Strom n) und der nachfolgenden Behandlungsstufe (6) zugeführt.

In der Eindampfanlage (5.2) werden den verschiedenen Zulaufströmen des Sammeltanks (5.1) die niedrigmolekularen Bestandteile entzogen. Diese werden aufkonzentriert und zur weiteren Verwendung abgeleitet (Strom i). Die verbleibende Flüssigkeit mit geringem niedrigmolekularen Anteil wird wie oben beschrieben den Extraktionsstufen und der Granulierungseinheit zugeführt.

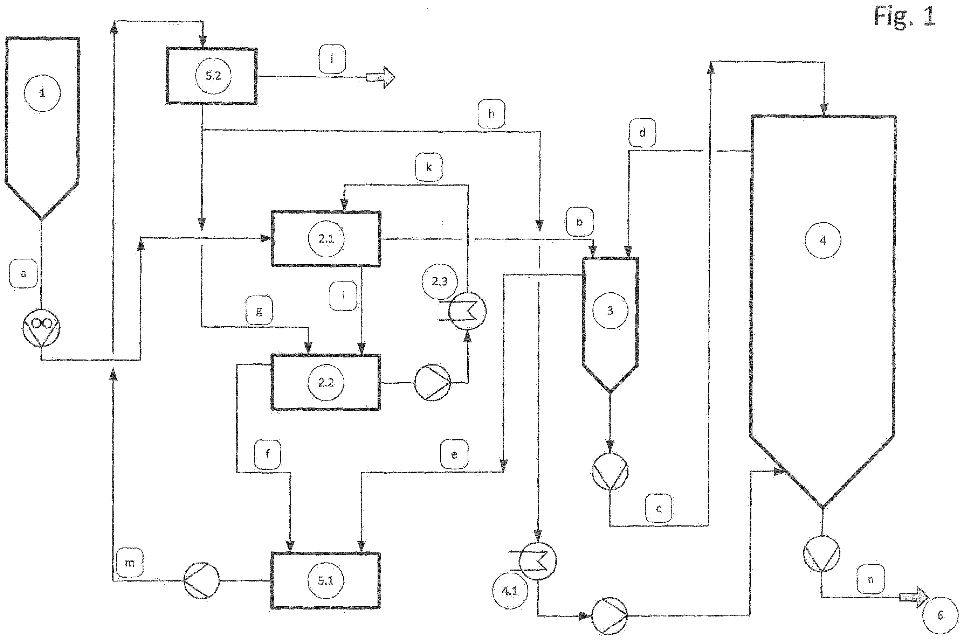

In Abweichung zum Verfahren, beschrieben in Figur 1, wird der Ablauf des Schneidwasserbehälters nicht direkt dem Sammeltank der Eindampfanlage (5.1) zugeleitet. Der Überschuss an Schneidwasser der Granulierstufe (2.1) wird nach dem Kühler (2.3) aus dem Schneidwasserstrom (k) entnommen und dem Haupt-Extrakteur (4) zugeleitet (Strom o). Der Schneidwasserstrom (o) kann je nach verfahrenstechnischem Bedarf auf verschiedenen Höhen in den Haupt-Extrakteur (4) eingegeben werden und vermischt sich dort mit der Extraktionsflüssigkeit. Hierdurch werden die Temperatur und die Konzentration der Extraktionsflüssigkeit im Haupt-Extrakteur positiv beeinflusst. Der zudosierte Massenstrom (o) fließt mit der Extraktionsflüssigkeit über die Pre-Extraktionsstufe (3) dem Sammeltank der Eindampfanlage (5.1) zu.

### Beispiel

Im Folgenden sind die Randbedingungen für eine Ausführungsform des erfindungsgemäßen Verfahrens angegeben. Diese stellen die Einstellwerte bei der Inbetriebnahme dar:

| | |
|---|---|
| Schneidwassertemperatur Vorlauf, t₁: | 20 °C |
| Schneidwassertemperatur Rücklauf, t₂: | 30 °C |
| Ausgeschleuster Schneidwasserstrom, ṁₛ: | 1.900 kg/h |
| Lactamkonzentration im Schneidwasser, cₛ: | 1 - 10 Gew.-% |
| Maximale Temperatur im Extrakteur (drucklos), t₃: | 100 °C |
| (hydrostatischer Druck vernachlässigt) | |

| | |
|---|---|
| Mittlere spezifische Wärmekapazität Schneidwasser, cₚ: | 4,18 kJ/(kg^{∗}K) |
| Eintrittstemperatur des Wasser-Granulatgemisches aus Vorextraktion, t₄: | 98 °C |
| Eintretende Wassermenge aus der Vorextraktion: | 19.500 kg/h |
| Eintretende DEMI-Wassermenge am Extraktionsapparat, m_{E}: | 4.000 kg/h |
| Lactam Austrittskonzentration der | 6 - 10 Gew.-%; |
| Extraktionsflüssigkeit, x_{c}: | 8 % |

### Bestimmung der auszuschleusenden Schneidwassermenge

Die auszuschleusende Schneidwassermenge entspricht ca. 1 - 10% der jeweils umlaufenden Gesamtschneidwassermenge und außerdem auch abhängig vom jeweils installierten Granuliersystem, Schneidwassertemperatur sowie der jeweiligen Verweilzeit des Granulates im Wasser. Schwankungen im Betriebsablauf durch unterschiedlich gefahrene Kapazitäten speziell bei mehreren Granulier Linien mit gemeinsamem Schneidwassertank führen schnell zu Konzentrationsschwankungen im Schneidwassertank, da dieser in der Regel nicht über großes Puffervolumen verfügt.

Eine konstante Messung der Lactamkonzentration im Schneidwasserstrom mit automatischer Regelung für die Einspeisung von DEMI-Wasser zur Regelung des gewünschten Lactamanteils im Schneidwasser kann dieses Problem dauerhaft beheben.

### Bestimmung der Kühlleistung laut Randbedingungen

Diese vorhandene Kühlleistung kann zur Einstellung der optimalen Extraktionstemperatur genutzt werden, d.h. die Wahrscheinlichkeit des Siedens der Extraktionsflüssigkeit an der Flüssigkeitsoberfläche des Extraktionsapparates kann verringert werden.

| | |
|---|---|
| Allgemein: | Q= mₛ ^{∗} cₚ ^{∗} delta (t₂ - t₃) |
| Beispiel | Q = 1.900 kg/(3600 s) ^{∗} 4,18 kJ/(kg^{∗}K) ^{∗} (30 - 100)K |
| | Q = 154,4 kW |

### Ermittlung der Konzentrationssenkung am Kopf des Extraktionsapparates

Das von unten kommende DEMI-wasser und das von oben kommende Granulat strömen im Gegenstrom im Extraktionsapparat aneinander vorbei, die Extraktionsflüssigkeit reichert sich hierbei entlang ihres Weges mit Lactam an. Die Extraktionsflüssigkeit verlässt den Extraktionsapparat mit der Lactamkonzentration x_{c}.

| | |
|---|---|
| Allgemein: | c_{g} = (ṁ_{E} ^{∗} x_{c}+ ṁₛ ^{∗} cₛ) / ṁ_{g} |
| Beispiel: | c_{g} = (4.000 kg/h ^{∗} 0,08 + 1.900 kg/h ^{∗} 0,02)/ 5.900 kg/h = 0,06 |

## Patentansprüche

1. Verfahren zur Herstellung von Polyamiden mit optimierter Strömungsführung enthaltend die folgenden Schritte:
a) Polymerisation von Lactam zu einer Polyamid-haltigen Polymerschmelze,
b) Granulierung der Polymerschmelze zu PA-Granulat unter Verwendung von Granulierflüssigkeit,
c) Extraktion von monomeren und oligomeren Bestandteilen aus dem PA-Granulat in einer Extraktionskolonne, wobei das PA-Granulat im Gegenstrom zu einem Extraktionsflüssigkeitsstrom geführt wird,
durchgeführt in einer Vorrichtung zur Herstellung von Polyamiden mit optimierter Strömungsführung enthaltend eine Polymerisationsanlage, eine Granulierungsanlage und eine Extraktionskolonne mit mindestens einem kopfseitigen Einlass vorgesehen für PA-Granulat, mindestens einem bodenseitigen Auslass vorgesehen für PA-Granulat, mindestens einem bodenseitigen Einlass vorgesehen für Extraktionsflüssigkeit, mindestens einem kopfseitigen Auslass vorgesehen für Extraktionsflüssigkeit und mehreren Einspeisestellen vorgesehen für Granulierflüssigkeit, wobei die Granulierungsanlage und die mehreren Einspeisestellen über eine Leitung miteinander verbunden sind, durch die ein Teil der in der Granulierungsanlage verwendeten Granulierflüssigkeit zu denEinspeisestellen überführbar ist, wobei die Temperatur der Granuliertlüssigkeit vor der Einspeisung in den Extraktionsflüssigkeitsstrom niedriger ist als die Temperatur des Extraktionsflüssigkeitsstroms vor der Einspeisung der Granulierflüssigkeit,
**dadurch gekennzeichnet, dass**
zumindest ein Teil der Granulierflüssigkeit an mehreren Einspeisestellen, welche sich auf verschiedenen Höhen der Extraktionskolonne befinden, in den Extraktionsflüssigkeitsstrom zur Einstellung der Temperatur und Lactamkonzentration des Extraktionsflüssigkeitsstroms eingespeist wird, wobei die Granulierflüssigkeit an 1 bis 10 Einspeisestellen eingespeist wird.

2. Verfahren nach dem vorhergehenden Anspruch, **dadurch gekennzeichnet, dass**
- die Temperatur der Granulierflüssigkeit vor der Einspeisung in den Extraktionsflüssigkeitsstrom 10 °C bis 50 °C, insbesondere 15 °C bis 40 °C, insbesondere 20 °C bis 30 °C, beträgt.

3. Verfahren nach einem der vorhergehenden Ansprüche, **dadurch gekennzeichnet, dass** der Anteil an Lactam und oligomeren Bestandteilen in der Granulierflüssigkeit vor der Einspeisung in den Extraktionsflüssigkeitsstrom niedriger ist als der Anteil an Lactam und/oder oligomeren Bestandteilen im Extraktionsflüssigkeitsstrom vor der Einspeisung der Granulierflüssigkeit, wobei der Anteil an Lactam und/oder oligomeren Bestandteilen in der Granulierflüssigkeit vor der Einspeisung in den Extraktionsflüssigkeitsstrom bevorzugt 0,1 Gew.-% bis 5,0 Gew.-%, besonders bevorzugt 0,5 Gew.-% bis 4,0 Gew.-%, ganz besonders bevorzugt 1,0 Gew.-% bis 3,0 Gew.-%, beträgt.

4. Verfahren nach einem der vorhergehenden Ansprüche, **dadurch gekennzeichnet, dass** die Granulierflüssigkeit an 1 bis 4 Einspeisestellen der Extraktionskolonne in den Extraktionsflüssigkeitsstrom zur Einstellung der Temperatur und Lactamkonzentration des Extraktionsflüssigkeitsstroms eingespeist wird.

5. Verfahren nach einem der vorhergehenden Ansprüche, **dadurch gekennzeichnet, dass** die Menge der eingespeisten Granulierflüssigkeit mit Hilfe geeigneter Einrichtungen gemessen und eingestellt wird.

6. Verfahren nach einem der vorhergehenden Ansprüche, **dadurch gekennzeichnet, dass** die Granulierflüssigkeit Lactam und/oder oligomere Bestandteile enthält und mit Hilfe eines Granulierflüssigkeitskreislaufes bereitgestellt wird, wobei in den Granulierflüssigkeitskreislauf kontinuierlich oder chargenweise reines demineralisiertes Wasser eingespeist wird und wobei bevorzugt der Anteil an Lactam und/oder oligomeren Bestandteilen in der Granulierflüssigkeit mit Hilfe eines geeigneten Messgerätes gemessen und die Menge des eingespeisten reinen demineralisierten Wassers basierend auf den so ermittelten Messwerten eingestellt wird, um so den Anteil an Lactam und oligomeren Bestandteilen in der Granulierflüssigkeit in einem bestimmten Bereich zu halten.

7. Verfahren nach einem der vorhergehenden Ansprüche, **dadurch gekennzeichnet, dass** zwischen dem Schritt der Granulierung und dem Schritt der Extraktion ein Schritt der Vorextraktion in einer Vorextraktionskolonne durchgeführt wird, wobei bevorzugt der Extraktionsflüssigkeitsstrom nach der Durchführung der Extraktion aus der Extraktionskolonne abgeleitet, anschließend dem Vorextraktionsbehälter zugeführt und dort im Gegenstrom zum PA-Granulat geführt wird.

8. Verfahren nach einem der vorhergehenden Ansprüche, **dadurch gekennzeichnet, dass** der Extraktionsflüssigkeitsstrom nach der Durchführung der Extraktion oder, falls eine solche durchgeführt wird, der Vorextraktion aus der Extraktionskolonne oder, falls eine Vorextraktion durchgeführt wird, aus der Vorextraktionskolonne abgeleitet und einem Sammelbecken zur Eindampfung zugeführt wird, wobei dem Sammelbecken zur Eindampfung keine zusätzliche Granulierflüssigkeit aus einer anderen Quelle zugeführt wird.

9. Vorrichtung zur Herstellung von Polyamiden mit optimierter Strömungsführung enthaltend
eine Polymerisationsanlage,
eine Granulierungsanlage und
eine Extraktionskolonne mit mindestens einem kopfseitigen Einlass vorgesehen für PA-Granulat, mindestens einem bodenseitigen Auslass vorgesehen für PA-Granulat, mindestens einem bodenseitigen Einlass vorgesehen für Extraktionsflüssigkeit, mindestens einem kopfseitigen Auslass vorgesehen für Extraktionsflüssigkeit und mehreren Einspeisestellen vorgesehen für Granulierflüssigkeit,
wobei die Granulierungsanlage und die mehreren Einspeisestellen über eine Leitung miteinander verbunden sind, durch die ein Teil der in der Granulierungsanlage verwendeten Granulierflüssigkeit zu den Einspeisestellen überführbar ist, wobei die Extraktionskolonne 1 bis 10 Einspeisestellen vorgesehen für Granulierflüssigkeit aufweist, die sich auf verschiedenen Höhen der Extraktionskolonne befinden, wobei die Vorrichtung zur Durchführung eines Verfahrens nach einem der Ansprüche 1 bis 8 geeignet ist.

10. Vorrichtung nach dem vorhergehenden Anspruch, **dadurch gekennzeichnet, dass** diese einen Sammeltank zur Eindampfung enthält, wobei der Sammeltank zur Eindampfung mit dem Extraktionsbehälter oder, falls ein solcher vorhanden ist, mit dem Vorextraktionsbehälter verbunden ist, und zwar derart, dass ein aus dem Extraktionsbehälter bzw. dem Vorextraktionsbehälter abgeleiteter Extraktionsflüssigkeitsstrom dem Sammelbecken zur Eindampfung zugeführt werden kann, und wobei der Sammeltank zur Eindampfung mit der Granulierungsanlage nicht derart verbunden ist, dass die Granulierflüssigkeit direkt dem Sammeltank zur Eindampfung zugeführt werden kann.

11. Vorrichtung nach einem der beiden vorhergehenden Ansprüche, **dadurch gekennzeichnet, dass** die Granulieranlage mit einem Granulierflüssigkeitskreislauf verbunden ist, der bevorzugt einen Granulierflüssigkeitstank, besonders bevorzugt einen Granulierflüssigkeitstank mit einem Überlaufventil, enthält.

12. Vorrichtung nach einem der Ansprüche 9 bis 11, **dadurch gekennzeichnet, dass** die Extraktionskolonne 1 bis 4 Einspeisestellen vorgesehen für Granulierflüssigkeit aufweist.

13. Vorrichtung nach einem der Ansprüche 9 bis 12, **dadurch gekennzeichnet, dass** die Vorrichtung einen Vorextraktionsbehälter aufweist.

## Claims

1. Process for producing polyamides with optimized flow guidance, comprising the following steps:
a) polymerizing lactam to a polyamide-containing polymer melt,
b) granulating the polymer melt to PA granules using granulation liquid,
c) extracting monomeric and oligomeric constituents from the PA granules in an extraction column, wherein the PA granules are guided countercurrently to an extraction liquid stream,
carried out in a device for producing polyamides with optimized flow guidance, comprising a polymerization system, a granulation system and an extraction column having at least one inlet at the top for PA granules, at least one outlet at the bottom for PA granules, at least one inlet at the bottom for extraction liquid, at least one outlet at the top for extraction liquid, and a plurality of infeed points for granulation liquid, wherein the granulation system and the plurality of infeed points are connected to one another via a line through which a portion of the granulation liquid used in the granulation system can be transferred to the infeed points, wherein the temperature of the granulation liquid before it is fed into the extraction liquid stream is lower than the temperature of the extraction liquid stream before the granulation liquid is fed in,
**characterized in that** at least a portion of the granulation liquid is fed into the extraction liquid stream at a number of infeed points that are situated at different heights of the extraction column in order to adjust the temperature and lactam concentration of the extraction liquid stream, wherein the granulation liquid is fed at from 1 to 10 infeed points.

2. Process according to the preceding claim, **characterized in that** the temperature of the granulation liquid before it is fed into the extraction liquid stream is from 10°C to 50°C, particularly from 15°C to 40°C, particularly from 20°C to 30°C.

3. Process according to one of the preceding claims, **characterized in that** the content of lactam and oligomeric constituents in the granulation liquid before it is fed into the extraction liquid stream is lower than the content of lactam and/or oligomeric constituents in the extraction liquid stream before the granulation liquid is fed in, wherein the content of lactam and/or oligomeric constituents in the granulation liquid before it is fed into the extraction liquid stream is preferably from 0.1% by weight to 5.0% by weight, particularly preferably from 0.5% by weight to 4.0% by weight, most particularly preferably from 1.0% by weight to 3.0% by weight.

4. Process according to one of the preceding claims, **characterized in that** the granulation liquid is fed into the extraction liquid stream in order to adjust the temperature and lactam concentration of the extraction liquid stream at from 1 to 4 infeed points of the extraction column.

5. Process according to one of the preceding claims, **characterized in that** the amount of granulation liquid fed in is measured and adjusted by means of suitable devices.

6. Process according to one of the preceding claims, **characterized in that** the granulation liquid contains lactam and/or oligomeric constituents and is provided by means of a granulation liquid circuit, wherein pure demineralized water is fed into the granulation liquid circuit continuously or batchwise and wherein the content of lactam and/or oligomeric constituents in the granulation liquid is preferably measured by means of a suitable measuring device, and the amount of pure demineralized water fed in is adjusted on the basis of the measured values so determined, in order thus to keep the content of lactam and oligomeric constituents in the granulation liquid within a specific range.

7. Process according to one of the preceding claims, **characterized in that** a step of pre-extraction in a pre-extraction column is carried out between the step of granulation and the step of extraction, wherein the extraction liquid stream, after the extraction has been carried out, is preferably discharged from the extraction column and then fed to the pre-extraction vessel and there guided countercurrently to the PA granules.

8. Process according to one of the preceding claims, **characterized in that** the extraction liquid stream, after the extraction has been carried out or, if pre-extraction is carried out, after the pre-extraction has been carried out, is discharged from the extraction column or, if pre-extraction is carried out, from the pre-extraction column and fed to a collecting tank for evaporation, wherein no additional granulation liquid from another source is fed to the collecting tank for evaporation.

9. Device for producing polyamides with optimized flow guidance, comprising
a polymerization system
a granulation system,
an extraction column having at least one inlet at the top for PA granules, at least one outlet at the bottom for PA granules, at least one inlet at the bottom for extraction liquid, at least one outlet at the top for extraction liquid, and a plurality of infeed points for granulation liquid,
wherein the granulation system and the plurality of infeed points are connected to one another via a line through which a portion of the granulation liquid used in the granulation system can be transferred to the infeed points, wherein the extraction column has from 1 to 10 infeed points for granulation liquid, which are situated at different heights of the extraction column, wherein the device is suitable for carrying out the process according to one of the claims 1 to 8.

10. Device according to the preceding claim, **characterized in that** it comprises a collecting tank for evaporation, wherein the collecting tank for evaporation is connected to the extraction vessel or, if present, to the pre-extraction vessel, in such a manner that an extraction liquid stream discharged from the extraction vessel or the pre-extraction vessel can be fed to the collecting tank for evaporation, and wherein the collecting tank for evaporation is not connected to the granulation system in such a manner that the granulation liquid can be fed directly to the collecting tank for evaporation.

11. Device according to one of the two preceding claims, **characterized in that** the granulation system is connected to a granulation liquid circuit which preferably comprises a granulation liquid tank, particularly preferably a granulation liquid tank with an overflow valve.

12. Device according to one of Claims 9 to 11, **characterized in that** the extraction column has from 1 to 4 infeed points for granulation liquid.

13. Device according to one of Claims 9 to 12, **characterized in that** the device has a pre-extraction vessel.

## Revendications

1. Procédé de production de polyamides à guidage d'écoulement optimisé, le procédé comprenant les étapes suivantes :
a) polymérisation de lactame pour obtenir un polymère fondu contenant du polyamide,
b) granulation du polymère fondu pour former un granulat de PA à l'aide d'un liquide de granulation,
c) extraction de composants monomères et oligomères du granulat de PA dans une colonne d'extraction, le granulat de PA étant acheminé à contre-courant à un courant de liquide d'extraction,
le procédé étant mis en œuvre dans un dispositif de production de polyamides à guidage d'écoulement optimisé, ledit dispositif comprenant une installation de polymérisation, une installation de granulation et une colonne d'extraction pourvue d'au moins une entrée côté tête prévue pour le granulat de PA, d'au moins une sortie côté fond prévue pour le granulat de PA, d'au moins une entrée côté fond prévue pour le liquide d'extraction, d'au moins une sortie côté tête prévue pour le liquide d'extraction et d'une pluralité de points d'introduction prévus pour le liquide de granulation, l'installation de granulation et la pluralité de points d'introduction étant reliés entre eux par une conduite par laquelle une partie du liquide de granulation utilisé dans l'installation de granulation peut être transférée aux points d'introduction, la température du liquide de granulation avant qu'il ne soit introduit dans le courant de liquide d'extraction étant inférieure à la température du courant de liquide d'extraction avant que le liquide de granulation ne soit introduit, **caractérisé en ce que**
au moins une partie du liquide de granulation est introduite dans le courant de liquide d'extraction au niveau de la pluralité de points d'introduction qui sont situés à différentes hauteurs de la colonne d'extraction, afin de régler la température et la concentration en lactame du courant de liquide d'extraction, le liquide de granulation étant introduit en 1 à 10 points d'introduction.

2. Procédé selon la revendication précédente, **caractérisé en ce que**
- la température du liquide de granulation avant son introduction dans le courant de liquide d'extraction est de 10 °C à 50 °C, en particulier de 15 °C à 40 °C, en particulier de 20 °C à 30 °C.

3. Procédé selon l'une des revendications précédentes, **caractérisé en ce que** la proportion de lactame et de composants oligomères dans le liquide de granulation avant l'introduction dans le courant de liquide d'extraction est inférieure à la proportion de lactame et/ou de composants oligomères dans le courant de liquide d'extraction avant l'introduction du liquide de granulation, la proportion de lactame et/ou de composants oligomères dans le liquide de granulation avant l'introduction dans le courant de liquide d'extraction étant de préférence de 0,1 % en poids à 5,0 % en poids, de manière particulièrement préférée de 0,5 % en poids à 4,0 % en poids, de manière tout particulièrement préférée de 1,0 % à 3,0 % en poids.

4. Procédé selon l'une des revendications précédentes, **caractérisé en ce que** le liquide de granulation est introduit dans le courant de liquide d'extraction en 1 à 4 points d'introduction de la colonne d'extraction afin de régler la température et la concentration en lactame du courant de liquide d'extraction.

5. Procédé selon l'une des revendications précédentes, **caractérisé en ce que** la quantité de liquide de granulation introduite est mesurée et réglée à l'aide de moyens appropriés.

6. Procédé selon l'une des revendications précédentes, **caractérisé en ce que** le liquide de granulation contient du lactame et/ou des composants oligomères et est fourni à l'aide d'un circuit de liquide de granulation, de l'eau déminéralisée pure étant introduite de manière continue ou discontinue dans le circuit de liquide de granulation et de préférence la proportion de lactame et/ou de composants oligomères dans le liquide de granulation étant mesurée à l'aide d'un appareil de mesure approprié et la quantité d'eau déminéralisée pure introduite étant réglée sur la base des valeurs de mesure ainsi déterminées afin de réduire la proportion de lactame et de composants oligomères dans le liquide de granulation pour coller à une certaine zone.

7. Procédé selon l'une des revendications précédentes, **caractérisé en ce qu'**une étape de pré-extraction est réalisée dans une colonne de pré-extraction entre l'étape de granulation et l'étape d'extraction, de préférence le courant de liquide d'extraction étant dérivé de la colonne d'extraction après que l'extraction a été réalisée, puis amené au récipient de pré-extraction où il est acheminé à contre-courant au granulat de PA.

8. Procédé selon l'une des revendications précédentes, **caractérisé en ce que**, après avoir effectué l'extraction ou, si celle-ci est effectuée, la pré-extraction de la colonne d'extraction ou, si une pré-extraction est effectuée, le courant de liquide d'extraction est dérivé de la colonne de pré-extraction et acheminé à un bassin collecteur destiné à l'évaporation, aucun liquide de granulation supplémentaire d'une autre source n'étant fourni au bassin collecteur destiné à l'évaporation.

9. Dispositif de production de polyamides à guidage d'écoulement optimisé, ledit dispositif contenant
une installation de polymérisation,
une installation de granulation et
une colonne d'extraction pourvue d'au moins une entrée côté tête prévue pour le granulat de PA, d'au moins une sortie côté fond prévue pour le granulat de PA, d'au moins une entrée côté fond prévue pour le liquide d'extraction, d'au moins une sortie côté tête prévue pour le liquide d'extraction et d'une pluralité de points d'introduction prévus pour le liquide de granulation,
l'installation de granulation et la pluralité de points d'introduction étant reliés entre eux par une conduite par laquelle une partie du liquide de granulation utilisé dans l'installation de granulation peut être transférée aux points d'introduction, la colonne d'extraction comportant 1 à 10 points d'introduction prévus pour le liquide de granulation, lesquels sont situés à différentes hauteurs de la colonne d'extraction, le dispositif étant approprié pour mettre en œuvre un procédé selon l'une des revendications 1 à 8 .

10. Dispositif selon la revendication précédente, **caractérisé en ce qu'**il contient un réservoir de collecte destiné à l'évaporation, le réservoir de collecte destiné à l'évaporation étant relié au récipient d'extraction ou, s'il y en a un, au récipient de pré-extraction, et ce de manière à ce qu'un courant de liquide d'extraction dérivé du récipient d'extraction ou du récipient de pré-extraction puisse être amené au bassin de collecte destiné à l'évaporation, et le réservoir de collecte destiné à l'évaporation n'étant pas relié à l'installation de granulation de manière à ce que le liquide de granulation puisse être amené directement au réservoir de collecte destiné à l'évaporation.

11. Dispositif selon l'une des deux revendications précédentes, **caractérisé en ce que** le système de granulation est relié à un circuit de liquide de granulation qui contient de préférence un réservoir de liquide de granulation, de manière particulièrement préférée un réservoir de liquide de granulation pourvu d'une soupape de trop-plein.

12. Dispositif selon l'une des revendications 9 à 11, **caractérisé en ce que** la colonne d'extraction comporte de 1 à 4 points d'introduction prévus pour le liquide de granulation.

13. Dispositif selon l'une des revendications 9 à 12, **caractérisé en ce que** le dispositif comporte un récipient de pré-extraction.
